Europäisches Patentamt

European Patent Office

Office européen des brevets

(11) Numéro de publication : **0 463 930 A1**

(12) # DEMANDE DE BREVET EUROPEEN

(21) Numéro de dépôt : **91401633.2**

(22) Date de dépôt : **18.06.91**

(51) Int. Cl.$^5$ : **G06K 1/12**, G06K 19/10, G09F 3/00

(30) Priorité : **29.06.90 FR 9008225**

(43) Date de publication de la demande :
**02.01.92 Bulletin 92/01**

(84) Etats contractants désignés :
**BE CH DE ES FR GB IT LI NL**

(71) Demandeur : **THOMSON-CSF**
**51, Esplanade du Général de Gaulle**
**F-92800 Puteaux (FR)**

(72) Inventeur : **Dubois, Jean-Claude**
**THOMSON-CSF SCPI Cédex 67**
**F-92045 Paris la Défense (FR)**
Inventeur : **Magarshack, John**
**THOMSON-CSF SCPI Cédex 67**
**F-92045 Paris la Défense (FR)**

(74) Mandataire : **Guérin, Michel et al**
**THOMSON-CSF SCPI**
**F-92045 PARIS LA DEFENSE CEDEX 67 (FR)**

(54) **Moyens de marquage d'objets, procédé de réalisation et dispositif de lecture.**

(57) Moyen de marquage d'objets comportant une gravure (4) de l'objet (1), et située à proximité de cette gravure (4) une marque (5) en matériau invisible ou quasiment invisible à l'oeil nu et capable d'émettre un rayonnement.
Applications : marquage d'objets de valeur.

FIG.4

EP 0 463 930 A1

L'invention concerne des moyens de marquage d'objets, le procédé de réalisation de ces moyens et des dispositifs de lecture de ces moyens de marquage.

Ce marquage est plus particulièrement destiné à permettre un repérage et à l'identification d'objets de valeur.

Différents types d'objets de valeur peuvent être marqués en vue de leur identification. Ce sont par exemple :

– des objets d'art, tels que statues, peintures, céramiques, bijoux ...

– des objets industriels, tels que télévisions, magnétoscopes, automobiles ...

Un tel marquage doit posséder un certain nombre de qualités :

– être indélébile et infalsifiable, l'effacement ne doit se faire qu'au prix d'une détérioration visible de l'objet,

– être lisible facilement par des moyens de lecture si possible portables et éventuellement automatisables,

– être suffisamment complet pour permettre l'identification,

– le marquage doit être peu repérable par un non spécialiste et doit pouvoir être effectué avec un prix raisonnable.

Certaines de ces qualités ne sont pas forcément compatibles. Il existe actuellement des systèmes de marquage tels que ceux utilisant des encres fluorescentes. Ces systèmes sont lisibles difficilement et peuvent être falsifiés.

L'objet de cette invention est de permettre le marquage d'un objet qui réunit les qualités nécessaires : de lecture facile, infalsifiable, difficilement effaçable sans destruction de l'objet.

Le marquage de l'objet peut être fait selon l'invention de deux façons. Le marquage d'un code par ablation laser et la fixation interne d'un circuit électronique "ou puce" lisible de l'extérieur.

C'est pourquoi l'invention concerne des moyens de marquage d'objets. Elle est caractérisée en ce que ces moyens comportent une gravure de l'objet, et située à proximité de cette gravure, une marque en matériau radioactif.

Selon l'invention, on prévoit également des moyens de marquage, caractérisés en ce qu'ils comportent un circuit électronique, un circuit d'alimentation électrique, une antenne d'émission d'ondes connectée au circuit électronique ainsi qu'une marque visible ou en matériau radioactif.

La réalisation du marquage ainsi que de toute cavité nécessaire pour loger les moyens de marquage fait appel, selon l'invention à un procédé de réalisation, caractérisé en ce que la gravure est réalisée à l'aide d'un laser provoquant une ablation du matériau à graver en raison de sa longueur d'onde d'émission et de sa puissance.

Enfin pour la lecture du dispositif marqué, l'invention prévoit un dispositif de lecture permettant la lecture des moyens de marquage, caractérisé en ce qu'il comporte :

– un détecteur de radioactivité ;

– un circuit de détection commandé par le détecteur et émettant un signal de détection ;

– un émetteur-récepteur émettant une onde vers la gravure et recevant de celle-ci en retour ladite onde affectée d'une déformation représentative de la gravure et fournissant un signal de lecture de gravure.

Le dispositif de lecture peut également être conçu pour lire les moyens de marquage pourvus d'un circuit électronique. Ce dispositif de lecture comporte alors un émetteur-récepteur fournissant un signal d'alimentation vers l'antenne ainsi qu'un signal codé et détectant tout signal d'information fournit par l'antenne ; un circuit de traitement capable de traiter ledit signal d'information.

Les différents objets et caractéristiques de l'invention apparaîtront plus clairement dans la description qui va suivre faite à titre d'exemple et des figures annexées qui représentent :

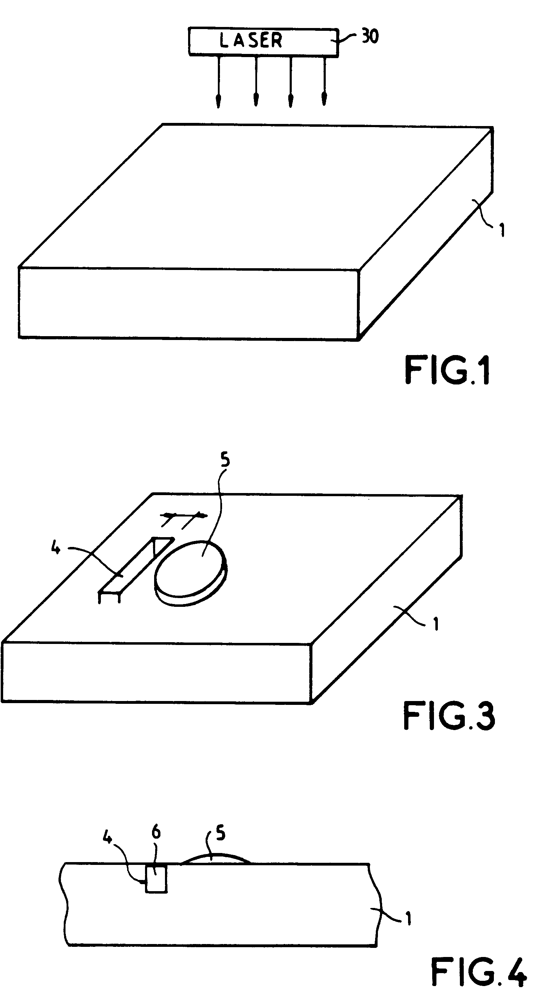

– la figure 1, un objet à graver et un laser de gravure ;

– les figures 2a à 2d, différentes phases de gravure ;

– la figure 3, un objet gravé ;

– la figure 4, une vue de coupe de l'objet de la figure 3 ;

– la figure 5, une vue générale d'un objet comportant un code à barres gravé ;

– la figure 6, un mode de réalisation de l'invention comportant un circuit électronique ;

– la figure 7, une variante de réalisation du dispositif de la figure 6 ;

– les figures 8 et 9, des formes de réalisation d'un circuit électronique selon l'invention ;

– la figure 10, un dispositif de lecture des moyens de marquage de la figure 3 ;

– la figure 11, une variante de réalisation du dispositif de la figure 8 ;

– la figure 12, un dispositif de lecture des moyens de marquage de la figure 6.

Selon le procédé général de l'invention, un marquage d'un objet est réalisé par gravure d'un code d'identification quasiment invisible à l'oeil nu et de dépôt d'une marque de repérage de cette gravure. Cette marque est en matériau et de préférence également invisible à l'oeil nu mais est dans ce cas là capable d'émettre un rayonnement, par exemple une marque en matériau radioactif, ou une marque en matériau fluorescent qui excité émettra un rayonnement identifiable (excité à 1 µm par exemple émet à 0, 5 µm).

Pour que cela soit plus clair dans la suite de la description, on va décrire un procédé de gravure préférentiel selon l'invention, bien que ce procédé ne soit pas limitatif.

Ce procédé de gravure selon l'invention opère par ablation du matériau à graver. Selon ce procédé on utilise un laser permettant une ablation du matériau à graver tel qu'un laser du type excimère par exemple émettant un rayonnement dans la gamme des ultra-violets avec une densité de puissance élevée

Par exemple, selon le matériau à graver la densité de puissance du faisceau laser pourra être comprise entre 200 mJ/cm² (pour les matériaux polymètres) et 40 J/cm² (pour les métaux ).

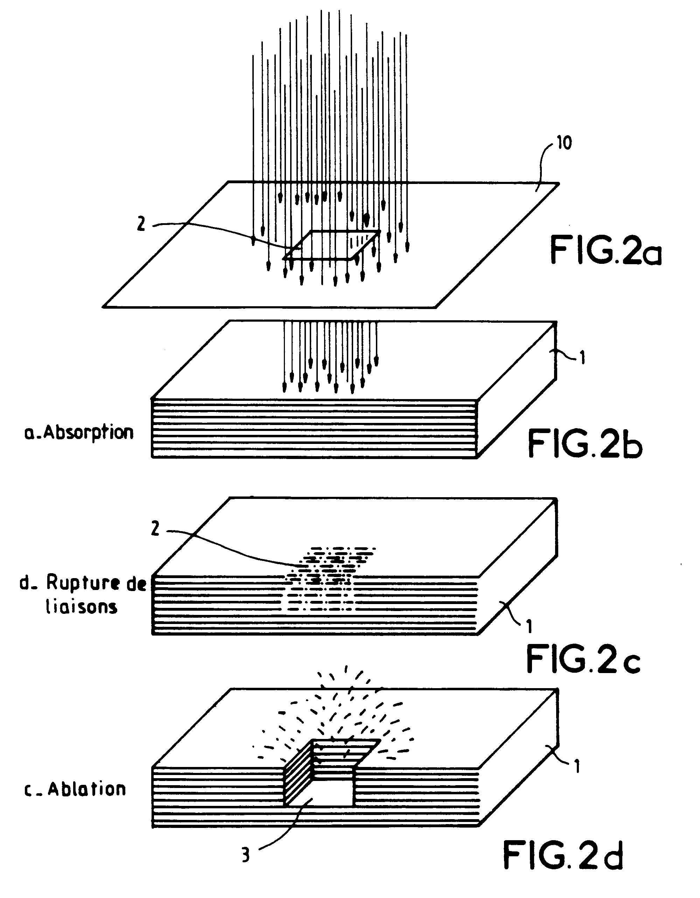

La gravure pourra être un code -barre et l'on utilisera un masque de gravure 10 tel que cela est représenté en figure 2a. Le corps à graver 1 sera donc soumis au faisceau laser (figure 2b) et, comme cela est représenté en figure 2c, le corps 1 sera gravé dans une zone 2. On obtient ainsi une gravure 3 telle que représentée en figure 2d.

Les lasers excimères émettent dans des longueurs d'ondes inférieures au micromètre. La gravure par ablation est une forme non thermique qui ne dégrade pas l'objet qui peut être constitué de matières aussi différentes que céramiques, verre, peintures, pierres précieuses ou semi-précieuses.

Dans une variante du procédé, le codage peut être lisible à l'oeil nu. Dans une autre variante, le codage n'est pas repérable et la dimension des barres du code est microscopique. Les dimensions des éléments du code peuvent atteindre quelques microns. Dans ce cas le code doit être repéré par l'opérateur désirant lire le code. Une variante du procédé consiste à déposer sur le code ou à coté du code une marque permettant de localiser la gravure. Par exemple cette marque 5 peut être en matériau qui recevant un rayonnement d'excitation émet un autre rayonnement. Elle peut être par exemple en matériau phosphorescent qui excité par un rayonnement à la longueur d'onde de 1 μm émet à une longueur d'onde de 0,5 μm ; ou en matériau polymère contenant du Paradimethyl - amino-nitrostilbène ou bien de la para-nitro métaméthyl n-oxy Pyridine (POM). Ce peut être également un radioisotope permettant de localiser le code par détection d'une faible radioactivité.

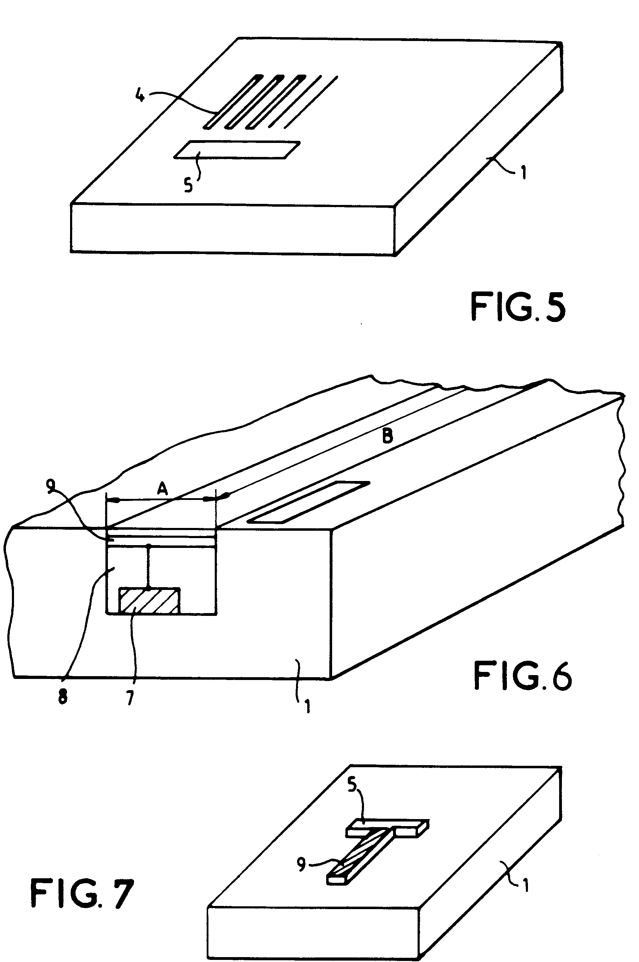

La figure 3 représente donc un dispositif selon l'invention. Il comporte une gravure 4 aux dimensions microscopiques qui peut représenter un code-barres et une marque 5 en matériau isotope permettant de retrouver aisément la gravure 4 qui, elle, est peu visible en raison de ses dimensions microscopiques.

Selon la figure 4, la gravure 4 est remplie d'un matériau transparent 6 qui évitera qu'à l'usage la gravure 4 ne se remplisse de poussières et qui permettra néanmoins une lecture optique de la gravure.

La figure 5 représente une vue générale d'un marquage d'un objet 1 comportant un code à barres gravé 4 et une marque de repérage 5 en matériau isotope.

L'objet 1 peut être l'objet à identifier lui-même ou bien une pièce d'identification qui est ensuite collée sur l'objet à identifier. Dans ce dernier cas, la pièce d'identification est, de préférence, de même nature et de même couleur que l'objet pour se confondre avec lui.

La figure 6 représente un moyen de marquage comportant, dans une cavité 8 réalisée comme cela a été décrit précédemment, un circuit électronique 7. Ce circuit électronique 7 possède en mémoire une information d'identification. Une antenne d'émission est connectée au circuit électronique 7.

L'antenne a des dimensions telles qu'elles permettent la réception d'une onde électromagnétique d'une longueur d'onde déterminée. Par exemple, elle aura une largeur A d'environ 100 micromètres et une longueur B accordée à λ /2 (par exemple B = 1 cm ).

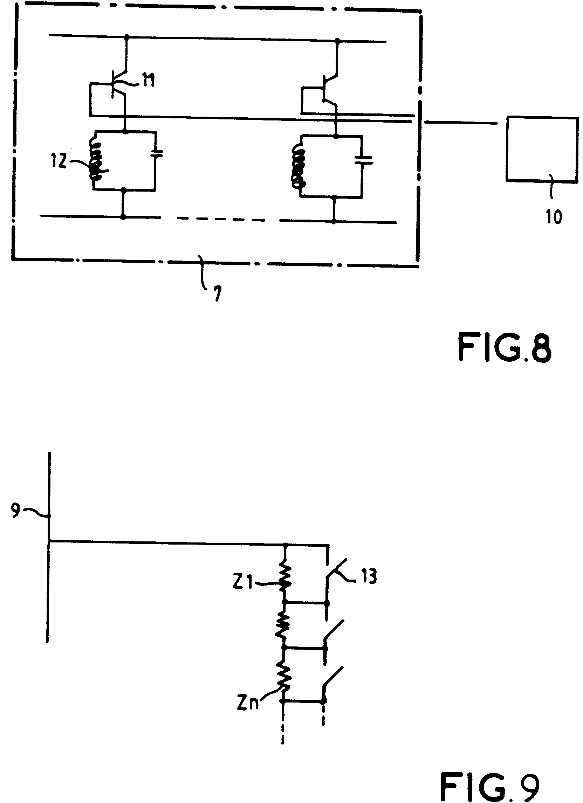

Le circuit électronique 7 pourra comporter un ou plusieurs circuits résonants 12 (figure 8) de telle façon que le circuit 7 ne renvoie que certaines fréquences qui correspondent au code d'identification de l'objet. Ce code d'identification est défini par l'impédance de charge que constitue le circuit résonant.

Au circuit électronique 7 peut être adjoint un autre circuit électronique 10 permettant de modifier les caractéristiques du circuit résonant. Ce circuit électronique 10 peut être logé dans le même trou 8 que le circuit 7. Comme cela est représenté en figure 8, au circuit résonant 7 sont associés des commutateurs tels que 11 commandés par le circuit électronique 10. Le circuit électronique 10 peut posséder son alimentation électrique qui lui est propre. Cette alimentation peut être logée dans le trou 8 où sont placés les circuits 7 et 10. Il peut aussi recevoir son énergie électrique de l'extérieur par des moyens connus dans la technique.

Selon la figure 8 les circuits 7 et 10 sont séparés mais ils peuvent aussi former un seul circuit intégré.

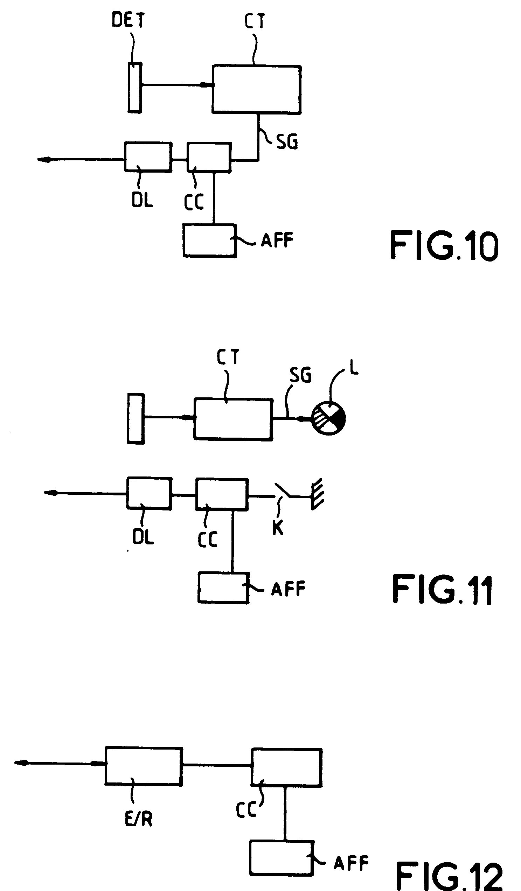

La figure 9 représente une variante de réalisation du circuit électronique 7. Ce circuit comporte des impédances de charge Z1 à Zn que l'on peut court-circuiter sélectivement sous la commande du circuit 10 par des commutateurs tels que 13.

L'ensemble des circuits électroniques 7 et de l'antenne 9 peuvent être noyés dans un matériau tel qu'une résine polymère de même couleur que ce corps 1.

L'antenne 9 est soit noyée dans la cavité 8, soit localisée à la surface du corps 1.

De plus, pour localiser l'antenne 9 du circuit 7, une marque 5 soit visible à l'oeil nu, soit détectable par tout moyen, telle qu'une marque 5 capable d'émettre un rayonnement (en matériau radioactif par exemple) est disposée à proximité de l'antenne 9.

Selon une variante de réalisation représentée en figure 7, la marque 5 est non seulement associée à l'antenne 9 mais l'antenne 9 est elle-même intégrée à la marque 5 et se confond avec celui-ci. Le circuit 7, non visible sur la figure 7, se situe alors de préférence en-dessous de la marque 5.

Sur la figure 6, on n'a pas prévu de circuit d'alimentation du circuit électronique 7. Selon une autre variante, on peut prévoir un circuit d'alimentation.

Selon une variante de réalisation de l'invention, le circuit électronique 7 est capable de recevoir par l'antenne 9 un code utilisateur (code secret), d'identifier ce code et si ce code est identifié, d'émettre par l'antenne 9 le code d'identification de l'objet qu'il possède en mémoire.

A titre d'exemple, le dispositif de la figure 6 est réalisé de la manière suivante :

Un trou de diamètre de l'ordre du millimètre est réalisé dans l'objet par exemple par un procédé de gravure décrit précédemment. Ce trou peut donc être réalisé par exemple par ablation laser. Les circuits ou "puces" sont ensuite placés dans le trou, une gravure de dimensions appropriées (100 μm x 1 cm selon l'exemple précédent) est prévue pour loger l'antenne 9. On peut également ne pas enterrer l'antenne, mais la coller sur l'objet.

Les fréquences de fonctionnement du circuit se font de préférence en ondes millimétriques. Par exemple, une fréquence de fonctionnement convenable peut être 94 GHz. A cette fréquence, la dimension de l'antenne est de l'ordre de 1,5 mm. L'ensemble circuits électroniques -antenne 9 peuvent alors êtres placés dans le trou 8 être ensuite recouvert d'une résine de scellement, par exemple une résine époxyde qui peut le rendre invisible.

Une autre version serait d'encastrer uniquement la puce et d'utiliser une partie métallique de l'objet comme antenne (anneau d'une bague, cadre d'un tableau, coffre d'un appareil ou automobile).

Le circuit peut être codé et lu de l'extérieur.

Selon une variante de réalisation on réalise sur l'objet 1 une combinaison d'un circuit électronique 7 placé sur ou dans l'objet 1 mais non visible et d'un code visible, tel qu'un code-barres, réalisé sur la résine de scellement du circuit électronique 7 ou sur toute autre partie de l'objet 1, selon un procédé précédent par exemple.

Le code-barres permet d'identifier aisément l'objet 1 et peut être lu par n'importe qui tandis que l'information d'identification contenue dans le circuit électronique 7 n'est accessible qu'à un utilisateur ayant un appareil de lecture adapté au circuit électronique et connaissant le code approprié lui permettant de lire le contenu de l'information enregistrée dans le circuit électronique 7.

L'invention concerne également des dispositifs de lecture des moyens de marquage précédemment décrits.

La figure 10 représente par exemple les moyens de lecture des moyens de marquage de la figure 3.

Un détecteur DET permet de détecter la marque 5. Il s'agit, par exemple, d'un détecteur de radioactivité si la marque 5 est en matériau radioactif. Lorsque le détecteur DET détecte la marque 5, il commande le circuit CT. Celui-ci émet un signal SG. Le signal SG commande le circuit de commande CC et un émetteur-récepteur DL émet un rayonnement lumineux qui balaie la surface de l'objet 1 où se trouve la marque 5. Le rayonnement lumineux est réfléchi par l'objet 1 vers l'émetteur-recepteur DL.

Le rayonnement réfléchi est perturbé (en phase) ou en intensité par la gravure qu'il rencontre à la surface de l'objet 1. Le détecteur détecte, de manière connue dans la technique, ces perturbations et détecte donc le code gravé sur l'objet. Un dispositif d'affichage AFF affiche l'information détectée.

Selon une variante de réalisation représentée en figure 9, le signal SG émis par le circuit CT est transmis à un dispositif indicateur lumineux ou sonore L. Un opérateur commande alors par un interrupteur K le fonctionnement du circuit de commande CC et de l'émetteur-récepteur DL.

Pour la lecture d'un dispositif de marquage à circuit électronique du type de la figure 6, un dispositif de la figure 10 aura une structure similaire aux dispositifs de lecture précédents.

Si on suppose qu'une marque visible par l'opérateur permet d'identifier aisément l'emplacement de l'antenne 9, le dispositif de la figure 10 n'a donc pas besoin de détecteur DET et de circuit CT.

Selon une réalisation préférée, le dispositif de la figure 6 n'a pas de circuit alimentation 21. Le circuit E/R est donc capable, sous la commande CC d'émettre un rayonnement Selon la charge de l'antenne 9, celle-ci renvoie certaines fréquences qui correspondent au code d'identification de l'objet caractérisé par la structure du circuit électronique 7. Le circuit E/R reçoit cette information de fréquences et la transmet au circuit CC qui la traite et l'affiche sur le dispositif d'affichage AFF.

Il est bien évident que la description qui précède n'a été faite qu'à titre d'exemple. Les valeurs numériques notamment n'ont été fournies que pour illustrer la description.

## Revendications

1. Moyen de marquage d'objets (1), caractérisé en ce qu'il comporte une gravure (4) de l'objet, et située à proximité de cette gravure (4) une marque (5) en matériau invisible ou quasiment invisible à l'oeil nu et capable d'émettre un rayonnement.

2. Moyen de marquage selon la revendication 1, caractérisé en ce que la gravure (4) est de dimensions microscopiques.

3. Moyen de marquage selon la revendication 1, caractérisé en ce que la gravure (4) est remplie d'une résine transparente.

4. Moyen de marquage selon la revendication 1, caractérisé en ce que la gravure (4) est un code à barres.

5. Moyen de marquage selon la revendication 1, caractérisé en ce que le marquage (5) est un matériau radioactif.

6. Moyen de marquage selon la revendication 1, caractérisé en ce que le marquage (5) est en matériau capable d'émettre un rayonnement sous l'effet d'une excitation.

7. Moyen de marquage selon la revendication 1, caractérisé en ce qu'il comporte un circuit électronique(7), une antenne d'émission/réception (9) d'ondes connectée au circuit électronique (7) ainsi qu'une marque visible ou en matériau radioactif (5).

8. Moyen de marquage selon la revendication 5, caractérisé en ce que l'objet (1) comporte une cavité (8) dans laquelle est logée le circuit électronique (7), l'antenne d'émission (9) étant placée au-dessus du circuit électronique (7) proche de la surface du corps (1) ou sur la surface du corps (1).

9. Moyen de marquage selon la revendication 5, caractérisé en ce que la marque visible (5) est une gravure.

10. Moyen de marquage selon la revendication 7, caractérisé en ce que l'antenne (9) est associée à la marque (5).

11. Procédé de gravure selon la revendication 1, caractérisé en ce qu'il comporte une étape de réalisation par gravure d'un moyen (4) d'identification invisible à l'oeil nu et une étape de réalisation d'une marque (5) visible à l'oeil nu ou capable d'émettre un rayonnement de localisation.

12. Procédé de gravure selon la revendication 11, caractérisé en ce que l'étape de réalisation par gravure comporte une phase de gravure proprement dite une phase d'insertion dans la gravure d'au moins un circuit électronique d'identification et d'une antenne d'émission de rayonnement.

13. Procédé de réalisation selon la revendication 11, caractérisé en ce que la gravure (4) est réalisée à l'aide d'un laser provoquant une ablation du matériau à graver en raison de sa longueur d'onde d'émission et de sa puissance.

14. Procédé de réalisation selon la revendication 8, caractérisé en ce que la cavité (8) est réalisée à l'aide d'un laser provoquant une ablation du matériau à graver en raison de sa longueur d'onde d'émission et de sa puissance.

15. Dispositif de lecture permettant la lecture des moyens de marquage selon la revendication 1, caractérisé en ce qu'il comporte :
    – un détecteur de radioactivité (DET) ;
    – un circuit de détection (CT) commandé par le détecteur (DET) et émettant un signal de détection (SG) ;
    – un émetteur-récepteur (DL) émettant une onde vers la gravure et rerevant de celle-ci en retour une onde représentative de la gravure et fournissant un signal de lecture de gravure.

16. Dispositit selon la revendication 15, caractérisé en ce que le signal de détection (SG) commande le fonctionnement d'un dispositif (L) émettant un signal perceptible par un opérateur.

17. Dispositif permettant la lecture de moyens de marquage de la revendication 7, caractérisé en ce qu'il comporte un émetteur-récepteur (E/R) fournissant un signal de fréquences vers l'antenne (9) et détectant tout signal de fréquences réfléchi par l'antenne (9) ; un circuit le traitement (CC) capable de traiter ledit signal de fréquences réfléchi.

FIG.1

FIG.3

FIG.4

FIG.2a

a. Absorption

FIG.2b

d. Rupture de liaisons

FIG.2c

c. Ablation

FIG.2d

FIG.5

FIG.6

FIG.7

FIG.8

FIG.9

FIG.10

FIG.11

FIG.12

**Office européen des brevets**

# RAPPORT DE RECHERCHE EUROPEENNE

Numero de la demande

EP    91 40 1633

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | DE-A-3723856 (H. BAYER ET AL.)<br>* colonne 2, lignes 45 - 67 *<br>* colonne 3, lignes 5 - 17 *<br>* colonne 3, lignes 33 - 39 *<br><br>--- | 1, 2, 4-6, 7, 11, 15-17 | G06K1/12<br>G06K19/10<br>G09F3/00 |
| A | DE-A-3703809 (BRAUN)<br>* abrégé *<br>* colonne 3, lignes 39 - 41 *<br>--- | 13, 14 | |
| A | WO-A-8907302 (J.J. BAUGH)<br>* abrégé; figures 3, 4 *<br>--- | 3 | |
| A | US-A-4373159 (A.W. LEAVITT ET AL.)<br>* colonne 2, lignes 45 - 48; figure 7A *<br>* colonne 7, lignes 33 - 50 *<br>--- | 7-12, 17 | |
| A | EP-A-242288 (G. COLAS ET AL.)<br>* colonne 4, lignes 33 - 44 *<br>----- | 5, 7, 15 | |
| | | | **DOMAINES TECHNIQUES RECHERCHES (Int. Cl.5)**<br><br>G06K<br>G09F<br>B23K<br>B44B |

Le présent rapport a été établi pour toutes les revendications

| Lieu de la recherche | Date d'achèvement de la recherche | Examinateur |
|---|---|---|
| BERLIN | 25 SEPTEMBRE 1991 | FRITZ S. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)